(19) Europäisches Patentamt

European Patent Office

Office européen des brevets

(11) **EP 2 722 928 A1**

(12) **EUROPEAN PATENT APPLICATION**

(43) Date of publication:
**23.04.2014 Bulletin 2014/17**

(51) Int Cl.:
*H01Q 3/26* (2006.01)    *H04B 17/00* (2006.01)

(21) Application number: **12188847.3**

(22) Date of filing: **17.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventors:
• **Osorio, Juan**
  **Redhill**
  **Surrey RH1 1NY (GB)**

• **Cicero, Vaucher**
  **Redhill**
  **Surrey RH1 1NY (GB)**
• **Raf, Roovers**
  **Redhill**
  **Surrey RH1 1NY (GB)**

(74) Representative: **Schouten, Marcus Maria**
**NXP B.V.**
**Intellectual Property & Licensing**
**High Tech Campus 60**
**5656 AG Eindhoven (NL)**

(54) **Testing and calibration of phased array antenna systems**

(57)    A system enables built-in-self test and calibration of integrated phased array systems. A signal generator applies a test signal either to the first end of the signal paths, in which case the second end of each signal path is routed individually to a power meter, or to the second end of each signal path individually in which case the first ends of the signal paths are routed to a power meter. This enables testing of each signal path individually or in combinations, using test signals which can represent the signals to be processed in use of the circuit. The invention also provides monitoring methods.

FIG. 2

EP 2 722 928 A1

**Description**

This invention relates to phased array antenna systems, used in receivers or transmitters.

A phased array comprises an array of antennas, in which the relative phases of the respective signals feeding the antennas are varied in such a way that the effective radiation pattern of the array is reinforced in a desired direction and suppressed in undesired directions.

Phased- array systems increase the RF performance of radios, by providing improved signal to noise ratio (SNR) for receivers when compared to single-path receivers, and increased effective isotropic radiated power (EIRP) in transmitters when compared to single path transmitters.

Due to the small wavelengths at higher frequencies (40 GHz and above, i.e. mm waves), phased array transceivers feature small form-factors, opening new application areas for integrated phased-arrays in for example point-to-point radios and wireless high-data-rate applications.

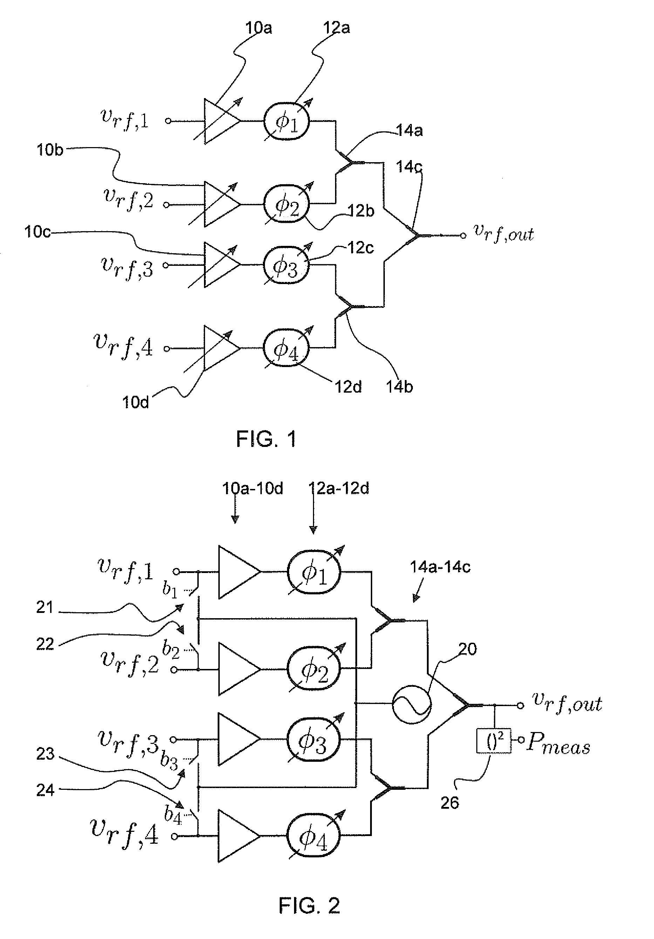

A typical block diagram of a phased-array receiver is shown in Figure 1, consisting of a four-path receiver with four low noise amplifiers (LNAs) 10a to 10d, four programmable phase shifters 12a to 12d and three power combiner elements 14a to 14c. Each amplifier and phase shifter forms a serial path between the received signal $v_{rf,1}$ to $v_{rf,4}$ and the output $v_{rf,out}$, and the combiners combine the four paths. As shown, the four paths are combined from four to two by combiners 14a,14b, and the final pair is combined to a single output by the combiner 14c. Essentially, the combiners together define an n:1 combining arrangement.

In general, both the gain of the amplifiers and the phase of the phase shifters can be adjusted.

Figure 1 shows four receivers, but in general the receiver (or a corresponding transmitter) can be use any number of paths. Typically, there may be between 4 and 32 signal paths.

Several calibration systems have been proposed for phased array antennas. US 5 530 449 discloses a calibration system which uses external pilot signals, but these are not compatible with the typical applications that use integrated phased arrays. Other known methods to calibrate phased array antennas are based on algorithms operating on baseband signals and depend on certain orthogonal codes that are transmitted. This type of calibration requires that the transmitter and receiver know the orthogonal codes that are sent. The fact that those corrections are made only in the baseband limits their capability to correct errors in the frond-end.

A major challenge of integrated phased array receivers is reducing the cost of testing; this can be prohibitively high due to the multiple high frequency paths to be tested. Another problem relates to the fact that the different paths in the receiver and transmitter have differences in their gain and phase for the same settings.

According to the invention, there is provided a phased array circuit and method as defined in the independent claims.

According to an aspect of the invention, there is provided a phased array circuit comprising:

a plurality of signal paths, each comprising an amplifier and a phase shifter in series;
a combining arrangement for combining the signal paths at a first end;
a signal generator for applying a test signal;
a power meter; and
a routing arrangement for:

providing the test signal to the combined first ends of the signal paths and selectively routing the second end of each signal path individually to the power meter; or
selectively providing the test signal from the second end along each signal path individually and routing the combined first ends of the signal paths to the power meter.

This arrangement can be used to determine that a phased array system is functional. Every branch of the system can be driven individually with a signal generator and the amplitude gain is measured by a power meter. Preferably, the power meter is for measuring a signal power and does not measure a signal phase.

This enables the relative gain of each path to be derived from the signal power measurement alone. Furthermore, the signal generator signal can be applied to pairs of paths to enable the phase mismatch between branches to be measured by measuring the combined power. This phase mismatch is obtained based only on signal power measurements and does not require actual phase measurement. The information obtained can be used to determine if the system is functional and also to calibrate the systematic mismatch between different phase shifters and different gain elements.

The system thus enables determination of whether the circuit is functional and estimation of the differences in gain and phase.

The invention can be implemented simply with a signal generator, a switch arrangement and a power meter (together with signal processing capability). Thus, the invention enables a built in self test (BIST) architecture.

By applying the test signal to the combined signal path, the splitters/combiners used to form the individual signal paths also form part of the components that can be tested. The power meter is based on amplitude detection, and no phase detection of individual signals is needed, so that no demodulation needs to take place before the power detection. The invention thus enables an IC to be tested (separately from the antennas with which it will be used), including testing of the path splitters and combiners, and in a way which can be implemented with simple amplitude detection

In one example, the phased array circuit is a receiver circuit. In this case, the first (combined) end comprises the receiver circuit output and the second end of each path comprises the signal reception end which is to be connected to a reception antenna. The routing arrangement is then for selectively providing the test signal to the second end of each signal path and routing the first (combined) end of the signal paths to the power meter. In this way, the test signal is provided to each path in turn.

The routing arrangement then can comprise a respective switch between the second (input) end of each signal path and the signal generator. By closing multiple switches, the signal generator signal can be provided to multiple receiver inputs at the same time, for example to enable phase comparisons to be made.

In another example, the phased array circuit is a transmitter circuit. In this case, the first (combined) end comprises the transmitter circuit signal input and the second end of each path comprises the signal transmission end to be connected to a transmission antenna. The routing arrangement is then for providing the test signal to the first (combined) end of each signal path and for selectively routing the signal at the second (antenna output) end of the each signal path to the power meter. Thus, the test signal is provided as input to all paths, and only selected paths are coupled to the power meter.

The routing arrangement can comprise a respective switch between the second end of each signal path and the power meter.

The routing arrangement further can comprise an arrangement of power combiners for combining signals at the second ends of selected multiple signal paths for supply to the power meter. In this way, the power meter can measure the combined power at the output of multiple transmitter paths.

The invention also provides a method of monitoring a phased array receiver circuit comprising a plurality of signal paths, each comprising an amplifier and a phase shifter in series, the signal paths being combined at the receiver output, the method comprising:

> applying a test signal along each phased array signal path forming the receiver inputs, in sequence;
> monitoring the power at the receiver output and thereby estimating the relative gain of each signal path.

The test signals applied to individual paths (or the individual paths being enabled to receive a shared test signal) enable the (relative) gains of the paths to be determined within the receiver.

A test signal can also be applied to a pair of phased array signal paths forming the receiver inputs, and a phase difference between the signal paths can then be estimated from the combined power which is monitored.

A sequence of test signals can also be applied to one of the phased array signal paths forming a receiver input, with different phase shifter settings. A phase performance can then be measured from the measured power.

The invention also provides a method of monitoring a phased array transmitter circuit comprising a plurality of signal paths, each comprising an amplifier and a phase shifter in series, the signal paths being split from a combined signal path at the transmitter input into the individual signal paths the method comprising:

> applying a test signal to the combined signal path forming the transmitter input;
> monitoring the power at the opposite ends of the signal paths forming the transmitter outputs, in sequence and thereby estimating the relative gain of each signal path.

The test signals measured from the individual paths enable the (relative) gains of the paths to be determined within the transmitter.

A phase difference between a pair of signal paths can be estimated from the combined power from a pair of transmitter output signals for the pair of signal paths.

A sequence of test signals can be applied to the transmitter input, with different phase shifter settings, and a phase performance can then be determined from the measured power at the transmitter output.

Examples of the invention will now be described in detail with reference to the accompanying drawings, in which:

> Figure 1 shows a known phased array antenna circuit;
> Figure 2 shows a first example of phased array receiver circuit of the invention;
> Figure 3 shows an example of phased array transmitter circuit of the invention;
> Figure 4 shows a second example of phased array receiver circuit of the invention; and
> Figure 5 shows a third example of phased array receiver circuit of the invention.

The invention provides a phased array circuit (receiver or transmitter) comprising a plurality of signal paths, each comprising an amplifier and a phase shifter in series. The signal paths are combined at a first end.

A signal generator applies a test signal either to the first end of the signal paths, in which case the second end of each signal path is routed individually to a power meter, or to the second end of each signal path individually in which case the first ends of the signal paths are routed to a power meter. This enables testing of each signal path individually or in combinations, using test signals which can represent the signals to be processed in use of the circuit. The invention also provides monitoring methods.

To illustrate the operation of the invention, an analysis is provided of the signals in the known configuration of Figure 1.

Suppose that the output of one of the branches in the system in Figure 1, when operated independently, is given by:

$$v_{rf,1} = A sin(\omega_o t)$$

Suppose a second branch has an output given by:

$$v_{rf,2} = (A + \epsilon)sin(\omega_o t + \delta)$$

with $\epsilon$ the amplitude difference and $\delta$ the phase difference. After combining the two signals, the output signal $v_{rf,out}$ is given by:

$$v_{rf,out} = A sin(\omega_o t) + (A + \epsilon)sin(\omega_o t + \delta)$$

The combined power is given by:

$$|v_{rf,out}|^2 = A^2 + (A + \epsilon)^2 + 2A(A + \epsilon)\cos(\delta)$$

The functionality of each path can be verified by applying a signal generator signal to each of the inputs in serial fashion.

The relative_output signal gain for each path can be estimated, and the gain flatness for different phase settings in the phase shifters can be assessed by doing a series of power measurements with different phase settings.

One embodiment of the invention, applied to a phased-array receiver, is presented in Figure 2.

In the case of a receiver, the inputs are from the multiple antennas to the amplifiers, and a single output is generated.

The built in self test (BIST) blocks consist of a signal generator 20 operating in the input frequency range, which is for example in the range of 20GHz to 120GHz, and four switches 21,22,23,24 which have control signals b1 to b4 applied to them. These switches are used to apply the signal from the signal generator to different inputs, either sequentially or in groups of two or to all inputs simultaneously. The BIST circuitry further comprises a power detector 26 which provides a measured power signal Pmeas.

Several different measurements can be performed by this system.

Enabling every switch 21-24 consecutively and measuring the power is possible to estimate the power gain of each independent branch. This gain can already be used as a criterion of failure if the gain is too high or too low or two of them are too different to be calibrated.

The gain difference $\epsilon$ can be estimated from the difference between two measurements for a constant test signal applied by the signal generator.

The difference in phase $\delta$ between two paths can be estimated by measuring the combined power when two switches are enabled and using the expression above for the combined power, once the gain difference parameters ε have already been established.

Sweeping the phase by setting different phases and then measuring the difference between the estimated value of δ and the measured value of δ is possible to decide if the phase offset is too large to calibrate the device or not.

The phase differences can then be calibrated. If the power meter is not accurate in absolute terms, still an estimate of the phase offset can be obtained by tracking maxima and minima points of the output power for different phase settings in the different paths.

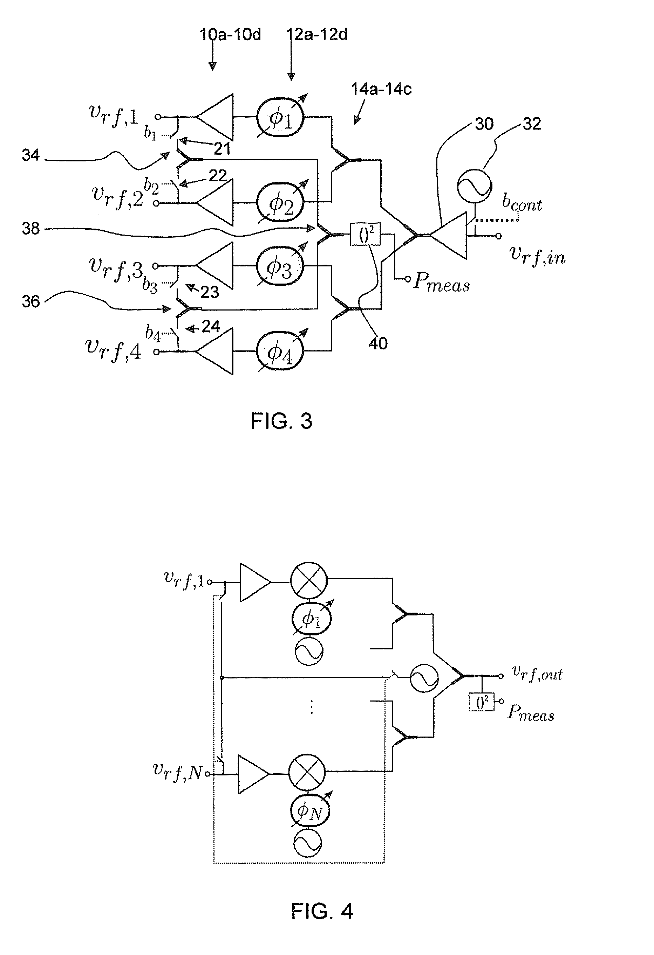

Figure 3 shows the BIST applied to a transmitter.

In the case of a transmitter, the input is from the signal source, and multiple outputs to the antennas are generated.

The amplifiers 10a-10d, phase shifters 12a-12d and combiners 14a-14c are arranged in the same way, but the signals progress in the opposite direction, from the single input Vrf,in to the four antenna outputs $v_{rf,1}$ to $v_{rf,4}$. The switches 21-24 are also present, but they couple the antenna outputs to the power meter rather than to the signal generator.

An input amplifier 30 is provided at the signal side, and the signal generator 32 couples its output into the input amplifier.

A set of power combiners 34,36,38 is provided at the outputs so that the output power from all four outputs (if they are switched into circuit by the switches 21-24) is combined and fed to the power meter 40.

The power combiners do not have to be very efficient or have a low noise figure. The only requirement is for the architecture to be as symmetric as possible.

In similar fashion as for the receiver example, it is possible to detect if sections of the device are not operating properly, and also to estimate the gain and phase mismatch of between different paths.

In exactly the same way as explained above, individual signal paths can be analysed to derive the relative gains of the paths. Combinations of paths (with the combined output power supplied to the power meter) can be analysed to derive phase differences once the relative amplitudes (values of ε) have been determined. Again, a phase sweep can also be carried out.

The approach of the invention can be applied to different types of phase array, for example Figure 4 shows a phase array which uses a phase shift in the local oscillator path.

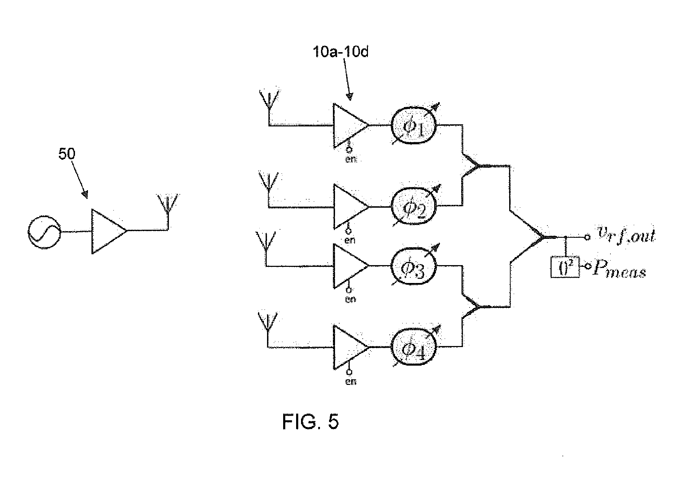

The example of Figure 2 routes the test signal to the receiver inputs by an interconnection and switching arrangement. An alternative shown in Figure 5 is to provide an external pilot antenna 50 which provides the test signal to all of the antennas. The phased array amplifiers 10a-10d then need to be able to be turned on and off individually, as represented in Figure 5 by the enable inputs "en" to each amplifier. Only one of the receivers is then enabled at a time. One of the transmitters can be used as the pilot antenna. This arrangement again enables relative powers to be obtained for the signal paths, including the antennas. Phase differences can again be obtained based on signal power measurements, by enabling multiple amplifiers. In this case, the function of applying a test signal along each phased array signal path in sequence involves providing the test signal to all path inputs (at the antenna), but enabling only the selected signal path.

One of the advantages of the architecture and method of the invention is that it allows and early functional verification of integrated transceivers before they are assembled or packaged without the necessity of expensive high frequency test capabilities.

The invention can be used in any single chip wireless phased array transceiver or in any single chip phased array receiver or transmitter for BIST or to calibrate the different paths. It can be also used in integrated circuits for point-to-point links with phased arrays and in integrated circuits for radar systems.

Various modifications will be apparent to those skilled in the art.

## Claims

1. A phased array circuit comprising:

   a plurality of signal paths, each comprising an amplifier (10a-10d) and a phase shifter (12a-12d) in series;
   a combining arrangement (14a-14c) for combining the signal paths at a first end;
   a signal generator (20;32) for applying a test signal;
   a power meter (26;40); and
   a routing arrangement (21-24) for:

   providing the test signal to the combined first ends of the signal paths and selectively routing the second end of each signal path individually to the power meter (40); or
   selectively providing the test signal from the second end along each signal path individually and routing the combined first ends of the signal paths to the power meter (26).

**2.** A phased array circuit as claimed in claim 1, comprising a receiver circuit, wherein:

the first end comprises the receiver circuit output and the second end of each path comprises the signal reception end; and

the routing arrangement (50) is for providing the test signal wirelessly to an antenna at the second end of each signal path, and selectively enabling the signal paths, and routing the first end of the signal paths to the power meter (26).

**3.** A phased array circuit as claimed in claim 1, comprising a receiver circuit, wherein:

the first end comprises the receiver circuit output and the second end of each path comprises the signal reception end; and

the routing arrangement (21-24) is for selectively providing the test signal to the second end of each signal path and routing the first end of the signal paths to the power meter (26).

**4.** A receiver circuit as claimed in claim 3, wherein the routing arrangement comprises a respective switch (21-24) between the second end of each signal path and the signal generator (20).

**5.** A phased array circuit as claimed in claim 1, comprising a transmitter circuit, wherein:

the first end comprises the transmitter circuit signal input and the second end of each path comprises the signal transmission end; and

the routing arrangement (21-24) is for providing the test signal to the first end of each signal path and for selectively routing the signal at the second end of the each signal path to the power meter (40).

**6.** A transmitter circuit as claimed in claim 5, wherein the routing arrangement comprises a respective switch (21-24) between the second end of each signal path and the power meter (40).

**7.** A transmitter circuit as claimed in claim 5, wherein the routing arrangement further comprises an arrangement of power combiners (34,36,38) for combining signals at the second ends of selected multiple signal paths for supply to the power meter (40).

**8.** A method of monitoring a phased array receiver circuit comprising a plurality of signal paths, each comprising an amplifier (10a-10d) and a phase shifter (12a-12d) in series, the signal paths being combined at the receiver output, the method comprising:

applying a test signal along each phased array signal path forming the receiver inputs, in sequence;
monitoring the power at the receiver output and thereby estimating the relative gain of each signal path.

**9.** A method as claimed in claim 8, wherein applying a test signal along each phased array signal path comprises providing the test signal wirelessly to an antenna at the the second end of each signal path, and selectively enabling the signal paths.

**10.** A method as claimed in claim 8, wherein applying a test signal along each phased array signal path comprises providing the test signal using a wired connection and switch arrangement to the selected phase array signal path.

**11.** A method as claimed in claim 8, further comprising applying a test signal along a pair of phased array signal paths forming the receiver inputs, and estimating a phase difference between the signal paths from the combined power which is monitored.

**12.** A method as claimed in any one of claims 8 to 11, further comprising applying a sequence of test signals along a phased array signal path forming the receiver input, with different phase shifter settings, and determining a phase performance from the measured power.

**13.** A method of monitoring a phased array transmitter circuit comprising a plurality of signal paths, each comprising an amplifier (10a-10d) and a phase shifter (12a-12d) in series, the signal paths being split from a combined signal path at the transmitter input into the individual signal paths, the method comprising:

applying a test signal to the combined signal path forming the transmitter input;
monitoring the power at the opposite ends of the signal paths forming the transmitter outputs, in sequence and thereby estimating the relative gain of each signal path.

14. A method as claimed in claim 13, further comprising estimating a phase difference between a pair of signal paths from the combined power from a pair of transmitter output signals for the pair of signal paths.

15. A method as claimed in claim 13 or 14, further comprising applying a sequence of test signals to the transmitter input, with different phase shifter settings, and determining a phase performance from the measured power at the transmitter output.

FIG. 1

FIG. 2

FIG. 3

FIG. 4

10a-10d

50

$v_{rf,out}$

$()^2$ $P_{meas}$

$\phi_1$

$\phi_2$

$\phi_3$

$\phi_4$

en

en

en

en

FIG. 5

Europäisches
Patentamt

European
Patent Office

Office européen
des brevets

## EUROPEAN SEARCH REPORT

Application Number

EP 12 18 8847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 171 849 A (SECR DEFENCE) 3 September 1986 (1986-09-03) * the whole document * | 1-15 | INV. H01Q3/26 ADD. H04B17/00 |
| A | US 2010/255774 A1 (KENINGTON PETER [GB]) 7 October 2010 (2010-10-07) * paragraph [0049]; figures 1a-1c * | 1,8,13 | |
| A,D | US 5 530 449 A (WACHS MARVIN R [US] ET AL) 25 June 1996 (1996-06-25) * the whole document * | 1,8,13 | |

TECHNICAL FIELDS
SEARCHED      (IPC)

H01Q
H04B

The present search report has been drawn up for all claims

| Place of search | Date of completion of the search | Examiner |
|---|---|---|
| Munich | 21 January 2013 | Ribbe, Jonas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 18 8847

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2013

| Patent document cited in search report | | Publication date | Patent family member(s) | | Publication date |
|---|---|---|---|---|---|
| GB 2171849 | A | 03-09-1986 | NONE | | |
| US 2010255774 | A1 | 07-10-2010 | EP | 2415186 A2 | 08-02-2012 |
| | | | US | 2010255774 A1 | 07-10-2010 |
| | | | WO | 2010115699 A2 | 14-10-2010 |
| US 5530449 | A | 25-06-1996 | DE | 69525423 D1 | 21-03-2002 |
| | | | DE | 69525423 T2 | 07-11-2002 |
| | | | EP | 0713261 A1 | 22-05-1996 |
| | | | JP | 3333672 B2 | 15-10-2002 |
| | | | JP | 8256008 A | 01-10-1996 |
| | | | US | 5530449 A | 25-06-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5530449 A